# EUROPÄISCHE PATENTANMELDUNG

(11) **EP 1 930 742 A1**
(43) Veröffentlichungstag der Anmeldung: **11.06.2008**
(21) Anmeldenummer: 07023221.0
(22) Anmeldetag: 30.11.2007
(51) Int. Cl.: G01S 5/14, A61H 3/06, G01C 21/20, G08G 1/005

(54) **Navigationsgerät und Navigationssystem für blinde und sehbehinderte Menschen, sowie Verfahren zur Navigation**

(30) Priorität: 04.12.2006 DE 102006057393
(71) Anmelder: Peters, Jörn, 59494 Soest (DE)
(72) Erfinder: Peters, Jörn, 59494 Soest (DE)
(74) Vertreter: Brune, Axel

(57) **Zusammenfassung**

Navigationsgerät (1) für blinde oder sehbehinderte Menschen, umfassend mindestens eine DGPS (Differential Global Positioning System)- Empfangseinrichtung (2), eine Sende- und Empfangseinrichtung (3) für Korrekturdaten (16) eines ersten Servers (10) eines Satellitenpositionierungsdienstes, eine Sende- und Empfangseinrichtung (4) für topographischen Kartendaten (17) eines zweiten Servers (11) mit topographischen Kartendaten, sowie Navigationssystem für blinde oder sehbehinderte Menschen, umfassend mindestens ein Satellitensystem (12), welches zur Übertragung von Navigationssignalen (20) eingerichtet ist, ein Navigationsgerät (1) gemäß einem der Ansprüche 1 bis 7, welches zum Empfang der Navigationssignale (20) eingerichtet ist, einen ersten Server (10), der zur Bereitstellung von Korrekturdaten (16) von Satellitenpositionierungsdiensten und/oder Korrekturdiensten für das mindestens eine Navigationsgerät (1) eingerichtet ist, wobei der erste Server (10) zur Übertragung der Korrekturdaten (16) mit einer Sende- und Empfangseinrichtung (14) ausgestattet ist, einen zweiten Server (11), der zur Bereitstellung von topographischen Kartendaten (17) für das mindestens eine Navigationsgerät (1) eingerichtet ist, wobei der zweite Server (11) mit einer Sende- und Empfangseinrichtung (15) zur Übertragung der Kartendaten (17) auf das mindestens eine Navigationsgerät (1) ausgestattet ist, eine Anzahl stationärer GPS-Antennen (13) als Referenzstationen, die zum Empfang der Navigationssignale (20) des Satellitensystems (12) eingerichtet sind, wobei die GPS-Antennen (13) mit dem ersten Server (10) verbunden sind, sowie ein Verfahren zu Navigation mit einem erfindungsgemäßen Navigationssystem.

## Beschreibung

Die vorliegende Erfindung betrifft ein Navigationsgerät für blinde oder sehbehinderte Menschen gemäß Anspruch 1, sowie ein Navigationssystem für blinde oder sehbehinderte Menschen gemäß Anspruch 8, sowie ein Verfahren zu Navigation mit einem erfindungsgemäßen Navigationssystem gemäß Anspruch 13.

Es sind Navigationsgeräte für die Auto- und auch Fußgängernavigation bekannt. Im Wesentlichen umfassen derartige Navigationsgeräte einen GPS-Empfänger, einen geeigneten Mikrocomputer und einen Touchscreen, der sowohl Anzeige, als auch Ein- und Ausgabeeinrichtung darstellt.

Ein derartiges Navigationsgerät ist für blinde oder sehbehinderte Menschen ungeeignet. Auf der anderen Seite besteht gerade bei blinden oder sehbehinderten Menschen ein großes Interesse an einem geeigneten Navigationsgerät.

Dementsprechend lag der hier vorgeschlagenen Erfindung die Aufgabe zu Grunde ein Navigationsgerät vorzuschlagen, welches den Anforderungen an eine Führung von blinden oder sehbehinderten Menschen gerecht wird.

Erfindungsgemäß wird diese Aufgabe durch ein Navigationsgerät gemäß Anspruch 1 gelöst. Dadurch, dass das Navigationsgerät für blinde oder sehbehinderte Menschen, mindestens eine DGPS (Differential Global Positioning System)- Empfangseinrichtung, eine Sende- und Empfangseinrichtung für Korrekturdaten eines ersten Servers eines Satellitenpositionierungsdienstes, sowie eine Sende- und Empfangseinrichtung für Kartendaten eines zweiten Servers für topographische Kartendaten, aufweist, kann ein Navigationsgerät bereitgestellt werden, welche einerseits eine sehr genaue Navigation im Dezimeterbereich zulässt, was insbesondere bei der Führung von blinden oder sehbehinderten Menschen überaus wichtig ist, da hier in wesentlich engeren Räumen navigiert werden muss, als es beispielsweise für ein Kraftfahrzeugnavigationsgerät notwendig ist. Hierzu sind im wesentlichen die DGPS (Differential Global Positioning System)- Empfangseinrichtung und die Sende- und Empfangseinrichtung für Korrekturdaten eines ersten Servers vorgesehen. Darüber hinaus können durch die Sende- und Empfangseinrichtung für Kartendaten eines zweiten Servers hochgenaue und detailreiche topographische Kartendaten bei der Navigation berücksichtigt werden, wie beispielsweise Informationen über den Zustand und die Ausstattung von begehbaren Wegen, etwaige dauerhafte Hindernisse, wie z.B. Schilder, Grünflächen, Ampeln, Fußgängerübergänge etc., sowie zusätzliche Informationen zu Eingängen von Häusern und Informationen zu kulturellen und wirtschaftlichen Einrichtungen mit ihrer angrenzenden Umgebung, so dass einerseits die Navigation noch präziser und auch für blinde und sehbehinderte Menschen angepasster ausgestaltet sein kann.

In einer vorteilhaften Ausgestaltung des vorgeschlagenen Navigationsgerätes kann vorgesehen sein, dass die Sende- und Empfangseinrichtung für Korrekturdaten eines ersten Servers eines Satellitenpositionierungsdienstes als GSM Sende- und Empfangseinrichtung, GPRS Sende- und Empfangseinrichtung, EDGE Sende- und Empfangseinrichtung und/oder UMTS Sende- und Empfangseinrichtung ausgestaltet ist. Die vorgenannten Arten von Sende- und Empfangseinrichtungen ermöglichen eine angemessene Datentransferrate, um die Korrekturdaten von dem ersten Server für die Korrekturdaten abrufen zu können.

Es kann weiterhin vorteilhafterweise vorgesehen sein, dass die Sende- und Empfangseinrichtung für Kartendaten eines zweiten Servers für topographische Kartendaten als GSM Sende- und Empfangseinrichtung, GPRS Sende- und Empfangseinrichtung, EDGE Sende- und Empfangseinrichtung und/oder UMTS Sende- und Empfangseinrichtung ausgestaltet ist. Die vorgenannten Arten von Sende- und Empfangseinrichtungen ermöglichen eine angemessene Datentransferrate, um die topographischen Kartendaten von dem zweiten Server für die topographischen Kartendatendaten abrufen zu können.

In einer weiteren vorteilhaften Ausgestaltung des vorgeschlagenen Navigationsgerätes kann vorgesehen sein, dass das Navigationsgerät mit einem RFID Lese- und/oder Schreibgerät ausgestattet ist. Das RFID Lese- und/oder Schreibgerät dient in dem vorgeschlagenen erfindungsgemäßen Navigationsgerät als kommunikative und korrespondierende Schnittstelle, wobei mit dem RFID Lese- und/oder Schreibgerät entsprechende Informationen während des Navigationsvorganges und für Informationsdienste von aktiven oder passiven RFID Transpondern im Bereich von 1 cm bis zu 15 m abgerufen oder auch übertragen werden können.

Auch kann vorteilhafterweise vorgesehen sein, dass das Navigationsgerät mit einer WLAN- und/oder Bluetooth- und/oder USB-Schnittstelle ausgestattet ist. Die Bluetooth-Schnittstelle kann beispielsweise zur Steuerung der Führungseinrichtung, insbesondere der Vibrationseinheiten oder zur Datenübertragung genutzt werden. Die WLAN Schnittstelle eignet sich für den Abruf von Daten an Hot Spots bzw. Access Points beispielsweise an Bahnhöfen.

Vorteilhafterweise kann weiterhin vorgesehen sein, dass das Navigationsgerät mit einer Führungseinrichtung ausgestattet ist, die als Vibrationsarmband, akustischer Signalgeber und/oder Sprachausgabeeinrichtung ausgestaltet sein kann. Eine derartige Führungseinrichtung ist optimal an die Bedürfnisse eines blinden oder Sehbehinderten Menschen angepasst und ermöglich entsprechend eine Kommunikation, die im Wesentlichen ohne visuelle Kommunikation auskommt.

In einer weiteren vorteilhaften Ausgestaltung des erfindungsgemäßen Navigationsgerätes kann vorgesehen sein, dass das Navigationsgerät mit einer Steuereinrichtung ausgestattet ist, die als Sprachsteuereinrichtung oder als Tastatur ausgestaltet sein kann. Entsprechend komfortabel können beispielsweise Routen über Sprache eingegeben werden.

Eine weitere Aufgabe der Erfindung liegt darin, ein vorteilhaftes Navigationssystem für blinde oder sehbehinderte Menschen vorzuschlagen, welches den Anforderungen an eine Führung von blinden oder sehbehinderten Menschen gerecht wird und sich insbesondere durch eine hohe Navigationsgenauigkeit auszeichnet.

Erfindungsgemäß wird diese Aufgabe durch ein Navigationssystem für blinde oder sehbehinderte Menschen, umfassend mindestens ein Satellitensystem, welches zur Übertragung von Navigationssignalen eingerichtet ist, ein Navigationsgerät gemäß einem der Ansprüche 1 bis 7, welches zum Empfang der Navigationssignale eingerichtet ist, einen ersten Server, der zur Bereitstellung von Korrekturdaten von Satellitenpositionierungsdiensten und/oder Korrekturdiensten für das mindestens eine Navigationsgerät eingerichtet ist, wobei der erste Server zur Übertragung der Korrekturdaten von Satellitenpositionierungsdiensten und/oder Korrekturdiensten an das mindestens eine Navigationsgerät mit einer Sende- und Empfangseinrichtung ausgestattet bzw. an eine Sende- und Empfangseinrichtung zur Übertragung der vorgenannten Daten auf das mindestens eine Navigationsgerät angeschlossen ist, einen zweiten Server, der zur Bereitstellung von topographischen Kartendaten für das mindestens eine Navigationsgerät eingerichtet ist, wobei der zweite Server mit einer Sende- und Empfangseinrichtung zur Übertragung der vorgenannten Daten auf das mindestens eine Navigationsgerät ausgestattet bzw. an eine Sende- und Empfangseinrichtung zur Übertragung der vorgenannten Daten auf das mindestens eine Navigationsgerät angeschlossen ist, eine Anzahl stationärer GPS-Antennen als Referenzstationen, die zum Empfang der Navigationssignale des Satellitensystems eingerichtet sind, wobei die GPS-Antennen mit dem ersten Server verbunden sind. Durch die Kombination und den Einsatz von komplementären oder einzelnen Satellitensystemen (GPS, GLONASS, Galileo) mit hochgenauen Echtzeit Korrekturdatendiensten und einem Navigationsgerät mit hochempfindlichen Differential GPS Sensoren (DGPS) kann eine sehr genaue, vorzugsweise im Dezimeterbereich liegende Ortsbestimmung für blinde oder sehbehinderte Menschen bereitgestellt werden. Ferner ist das erfindungsgemäße Navigationsgerät mit Hilfe von satellitengestützten Daten und zusätzlichen topographischen Ergänzungsmessungen dazu eingerichtet, den blinden oder sehbehinderten Menschen sicher über Gehwege oder sonstige begehbare Wege zu führen. Hiermit kann blinden oder stark sehbehinderten Menschen mittels satellitengestützter und dezimetergenauer Navigation eine wesentliche Erweiterung der Lebensqualität und Mobilität ermöglicht werden. Das unter anderem Neue an diesem System ist insbesondere die Zusammenführung moderner technischer Vermessungsmethoden mit genauen und homogenisiertem Katasterdaten / Katasterkarten auf dem vorhandenen und noch wachsendem Satellitensystem GPS, GLONASS und Galileo. Die Kombination ermöglicht in vielen Bereichen (zurzeit bundesweit) die dezimetergenaue Führung eines Menschen oder eines Fahrzeuges (in jeglicher Form). Als Grundlage dienen homogenisierte und genaue Katasterkarten, die um die zusätzlich ermittelten bzw. gemessenen Topographiedaten der vorhandenen Infrastruktur ergänzt werden. Sie beinhalten sämtliche Informationen über den Zustand und die Ausstattung von begehbaren Wegen. Insbesondere enthalten sie Angaben über etwaige dauerhafte Hindernisse, wie z.B. Schilder, Grünflächen, Ampeln, Fußgängerübergänge etc., sowie zusätzliche Informationen zu Eingängen von Häusern und Informationen zu kulturellen und wirtschaftlichen Einrichtungen mit ihrer angrenzenden Umgebung.

In einer vorteilhaften Ausgestaltung des vorgeschlagenen Navigationssystems kann vorgesehen sein, dass die Sende- und Empfangseinrichtung des ersten Servers für Korrekturdaten eines Satellitenpositionierungsdienstes als GSM Sende- und Empfangseinrichtung, GPRS Sende- und Empfangseinrichtung, EDGE Sende- und Empfangseinrichtung und/oder UMTS Sende- und Empfangseinrichtung ausgestaltet ist. Die vorgenannten Arten von Sende- und Empfangseinrichtungen ermöglichen eine angemessene Datentransferrate, um die Korrekturdaten von dem ersten Server auf das mindestens eine Navigationsgerät übertragen zu können.

In einer weiteren vorteilhaften Ausgestaltung des vorgeschlagenen Navigationssystems kann vorgesehen sein, dass die Sende- und Empfangseinrichtung des zweiten Server, der zur Bereitstellung von topographischen Kartendaten eingerichtet ist, als GSM Sende- und Empfangseinrichtung, GPRS Sende- und Empfangseinrichtung, EDGE Sende- und Empfangseinrichtung und/oder UMTS Sende- und Empfangseinrichtung ausgestaltet ist. Die vorgenannten Arten von Sende- und Empfangseinrichtungen ermöglichen eine angemessene Datentransferrate, um die topographischen Kartendaten von dem zweiten Server für die topographischen Kartendaten auf das mindestens eine Navigationsgerät übertragen zu können.

Es kann ebenfalls vorteilhafterweise vorgesehen sein, dass das Navigationssystem mindestens einen RFID-Transponder aufweist. Der mindestens eine Transponder kann dazu eingerichtet sein aktiv (bis zu 15 m Sendebereich) oder auch passive (ab 1 cm Lesebereich) mit dem RFID Lesegerät des Navigationsgerätes zu kommunizieren. Dabei können Informationen, Landmarkensystem und/oder Navigationsdaten ausgetauscht werden.

In einer weiteren vorteilhaften Ausgestaltung des erfindungsgemäßen Navigationssystems kann vorgesehen sein, dass es sich bei den topographischen Kartendaten um Katasterdaten der Katasterbehörden und/oder erweiterte Topographiedaten der Städte handelt, die auf die Bedürfnisse blinder oder sehbehinderter Menschen abgestimmt worden sind. Auf diese Art und Weise kann eine besonders auf die Bedürfnisse von blinden und sehbehinderten Menschen abgestimmte Datengrundlage bereitgestellt werden, insbesondere der Straßenbelag, gefährliche oder abschüssige Straßen etc. bei der Navigation berücksichtigt werden.

Eine weitere Aufgabe der vorgeschlagenen Erfindung liegt darin, ein vorteilhaftes Verfahren zur Navigation mit einem erfindungsgemäßen Navigationssystem für blinde oder sehbehinderte Menschen gemäß einem der Ansprüche 8 bis 12 vorzuschlagen. Erfindungsgemäß ist dieses Verfahren durch die nachfolgenden Schritte gekennzeichnet:
a) die gewünschte Zielführung wird über das Sprachmodul oder eine Tastatur an das Navigationsgerät übertragen
b) das Navigationsgerät berechnet auf der Grundlage der, um die zusätzliche Topographie / Infrastruktur erweiterten Kartendaten, die sicherste Route über die Bahndaten der Satelliten und die entsprechenden Korrekturdaten eines Referenzsystems (z.B. SAPOS - Satellitenpositionierungsdienst),
c) das Navigationsgerät navigiert den Benutzer über / durch einen virtuellen Korridor von 30-50 cm Breite auf einem sicheren Gehweg.

Durch dieses Verfahren wird der mit einem erfindungsgemäßen Navigationsgerät ausgerüstete Benutzer in sicherer Art und Weise navigiert, da einerseits durch die Korrekturdaten eine besonders genaue Positionsbestimmung möglich ist, andererseits werden auch besondere Hindernisse, insbesondere für blinde oder sehbehinderte Menschen nur schwer überwindbare Hindernisse, durch die zusätzlichen Kartendaten in die Navigationsberechnung einbezogen.

In einer vorteilhaften Ausgestaltung des vorgeschlagenen Verfahrens kann vorgesehen sein, dass der Benutzer bei Abweichung von der vorausberechneten Route wieder zurück auf seine vorher berechnete Strecke geleitet wird.

In einer weiteren vorteilhaften Ausgestaltung des Verfahrens kann vorgesehen sein, dass die erforderlichen Korrekturdaten für den Empfang der GPS Daten sekündlich verbessert und zwischen der Sende- und Empfangseinrichtung des ersten Servers und der Sende- und Empfangseinrichtung des mindestens einen Navigationsgerät übertragen werden. Durch die zeitnahe Aufbereitung der Korrekturdaten wird die Beständigkeit der genauen Positionsbestimmung gewährleistet werden.

Es kann weiterhin vorteilhafterweise vorgesehen sein, dass der Benutzer bei sicherheitsrelevanten Abweichungen von der Strecke zu einem "Stop" veranlasst wird und eine Neuberechnung der Strecke durchgeführt wird. Das entsprechende "Stop"-Kommando kann beispielsweise über die Führungseinrichtung, insbesondere durch Sprachausgabe an den Benutzer übermittelt werden und stellt sicher, dass der Benutzer nicht in gefährliche Situationen gelangt.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: Prinzipskizze eines Navigationssystems für blinde oder sehbehinderte Menschen;
- Fig. 2: ein Erfassungsbeispiel für topographische Kartendaten;
- Fig. 3: ein Erfassungsbeispiel für topographische Kartendaten, insbesondere Straßen und deren Zustand bzw. Oberfläche;

Es werden insbesondere folgende gebräuchliche Abkürzungen verwendet:

| | |
|---|---|
| GPS | Global Positioning System |
| SMS | Short Message Service |
| ÖPNV | Öffentlicher Personennahverkehr |
| GLONASS | Kurzbezeichnung für ein Satellitennavigationssystem (Globales Navigations-Sateiiiten-System), das vom russischen Verteidigungsministerium betrieben wird, ähnlich dem amerikanischen GPS |
| SAPOS | Satellitenpositionierungsdienst der deutschen Landesvermessung |
| ASCOS | Satelliten-Referenzdienst der E.ON Ruhrgas AG, der einheitliche Korrekturdaten für GPS- und GLONASS-Positionierungen zur Verfügung stellt |
| GPRS | General Packet Radio Service, (engl. "Allgemeiner paketorientierter Funkdienst") ist ein paketorientierter Übertragungsdienst, der im Bereich des Mobilfunks eingesetzt wird. |
| EDGE | Enhanced Data Rates for GSM Evolution (EDGE) bezeichnet eine Technik zur Erhöhung der Datenrate in GSM-Mobilfunknetzen durch Einführung eines zusätzlichen Modulationsverfahrens. Mit EDGE werden GPRS zu E-GPRS (Enhanced GPRS) |
| UMTS | Universal Mobile Telecommunications System, steht für den Mobilfunkstandard der dritten Generation (3G), mit dem deutlich höhere Datenübertragungsraten als mit dem GSM-Standard möglich sind. |
| GSM | Das Global System for Mobile Communications (früher Groupe Spécial Mobile, GSM) ist ein Standard für volldigitale Mobilfunknetze, der hauptsächlich für Telefonie, aber auch für leitungsvermittelte und paketvermittelte Datenübertragung sowie Kurzmitteilungen (Short Messages) genutzt wird. Es ist der erste Standard der sogenannten zweiten Generation ("2G") als Nachfolger der analogen Systeme der ersten Generation und ist der weltweit am meisten verbreitete Mobilfunk-Standard. |
| DGPS | Differential Global Positioning System |
| NFC | drahtlose Kommunikationstechnologie Near Field Communication |

Folgende Bezugszeichen werden in den nachfolgenden Figuren verwendet:
- 1: Navigationsgerät
- 2: DGPS-Empfänger
- 3: Sende- und Empfangseinrichtung für Korrekturdaten
- 4: Sende- und Empfangseinrichtung für Kartendaten
- 5: RFID-Lesegerät
- 6: Schnittstellen
- 7: Steuereinrichtung
- 8: Führungseinrichtung
- 9: - frei -
- 10: erster Server für Korrekturdaten
- 11: zweiter Server für topographische Kartendaten
- 12: Satelliten
- 13: Stationäre GPS-Empfänger / Referenzstationen
- 14: Sende- und Empfangseinrichtung des ersten Servers
- 15: Sende- und Empfangseinrichtung des zweiten Servers
- 16: Korrekturdaten (angedeuteter Datenstrom)
- 17: Kartendaten (angedeuteter Datenstrom)
- 18: RFID-Transponder
- 19: RFID-Daten (angedeuteter Datenstrom)
- 20: Navigationssignale (angedeuteter Datenstrom)

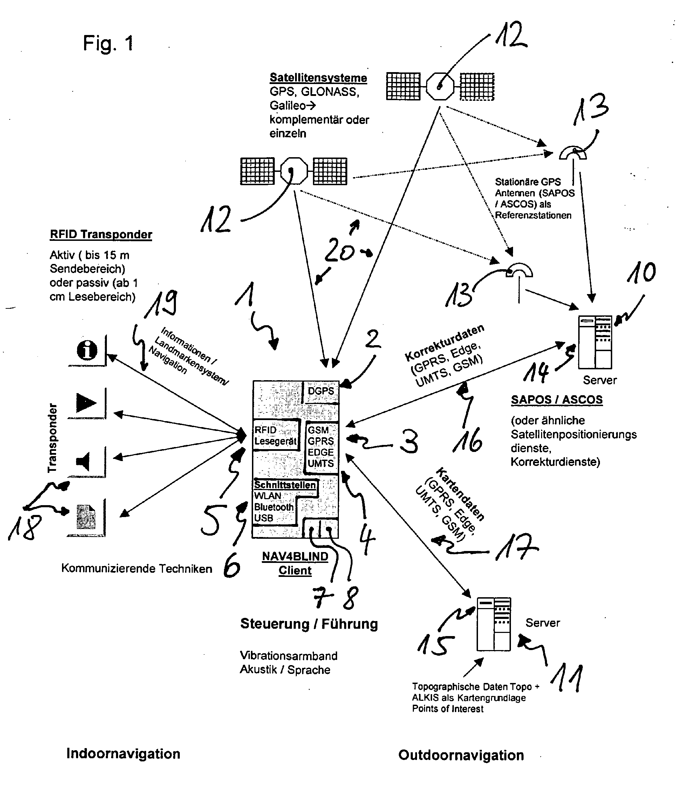

Zunächst wird auf Fig. 1 Bezug genommen.

Ein erfindungsgemäßes Navigationsgerät 1 für blinde oder sehbehinderte Menschen (nachfolgend Navigationsgerät) ist Teil eines erfindungsgemäßen Navigationssystems für blinde oder sehbehinderte Menschen (nachfolgend Navigationssystem).

Grundsätzlich weist ein erfindungsgemäßes Navigationsgerät 1 vergleichbare technische Einrichtungen wie ein herkömmliches, dem Fachmann ausreichend bekanntes Navigationsgerät auf, insbesondere einen Mikrocomputer, einen Akku, ein Display, etc.. Ein erfindungsgemäßes Navigationsgerät weist demgegenüber einige weitere bzw. abweichende Komponenten auf.

Für ein erfindungsgemäßes Navigationsgerät 1 ist vorgesehen, dass das Navigationsgerät mit einer Empfangseinrichtung 2 für Signale eines DGPS Systems ausgestattet ist. Beim DGPS System handelt es sich um ein globales Positionssystem mit Differentialsignal, bei dem durch das Ausstrahlen von Korrekturdaten (Bahn- und Zeitsystem) die Genauigkeit der GPS-Navigation gesteigert werden kann. Vorteilhafterweise ist der DGPS Empfänger mit Chip Technologien der neuesten Generation ausgestattet.

Des Weiteren ist das erfindungsgemäße Navigationsgerät mit einer Sende- und Empfangseinrichtung 3 für Korrekturdaten 16 ausgestattet. Die Sende- und Empfangseinrichtung 3 für Korrekturdaten kann wahlweise als GSM Sende- und Empfangseinrichtung, GPRS Sende- und Empfangseinrichtung, EDGE Sende- und Empfangseinrichtung und/oder UMTS Sende- und Empfangseinrichtung ausgestaltet sein.

Auch ist das erfindungsgemäße Navigationsgerät mit einer Sende- und Empfangseinrichtung 4 für topographische Kartendaten 17 ausgestattet. Die Sende- und Empfangseinrichtung für topographische Kartendaten kann wahlweise als GSM Sende- und Empfangseinrichtung, GPRS Sende- und Empfangseinrichtung, EDGE Sende- und Empfangseinrichtung und/oder UMTS Sende- und Empfangseinrichtung ausgestaltet sein.

Ferner ist das erfindungsgemäße Navigationsgerät mit einem RFID (Radio Frequency Identification) Lese- und/oder Schreibgerät 5 ausgestattet. RFID ist ein Verfahren zur automatischen Identifizierung von Gegenständen oder Lebewesen. Das RFID Lese- und/oder Schreibgerät dient der Identifizierung mit Hilfe von Hochfrequenz und erlaubt neben der berührungslosen Identifizierung und der Lokalisierung von Gegenständen auch die automatische Erfassung und Speicherung von Daten. Das RFID Lese- und/oder Schreibgerät dient in dem vorgeschlagenen erfindungsgemäßen Navigationsgerät als kommunikative und korrespondierende Schnittstelle, wobei mit dem RFID Lese- und/oder Schreibgerät entsprechende Informationen während des Navigationsvorganges und für Informationsdienste von aktiven oder passiven RFID Transpondern im Bereich von 1 cm bis zu 15 m abgerufen oder auch übertragen werden können.

Weiterhin ist das erfindungsgemäße Navigationsgerät mit einer Schnittstelle 6, die als WLAN Schnittstelle und/oder einer Bluetooth Schnittstelle und/oder einer USB Schnittstelle ausgestaltet sein kann, ausgestattet. Die Bluetooth-Schnittstelle kann beispielsweise zur Steuerung der Führungseinrichtung, insbesondere der Vibrationseinheiten oder zur Datenübertragung genutzt werden. Die WLAN Schnittstelle eignet sich für den Abruf von Daten an Hot Spots bzw. Access Points beispielsweise an Bahnhöfen.

Ferner ist das Navigationsgerät mit einer Steuereinrichtung 7 ausgestattet. Die Steuereinrichtung kann wahlweise als Steuereinrichtung ausgestaltet sein, die mittels Sprache bedient werden kann, oder als Tastatur ausgestaltet sein.

Auch ist das Navigationsgerät mit einer Führungseinrichtung 8 ausgestattet, die als Vibrationsarmband, akustischer Signalgeber und/oder Sprachausgabeeinrichtung ausgestaltet sein kann. Das Führungsmittel dient der Führung eines blinden oder stark sehbehinderten Menschen und erfolgt über akustische Signale, Sprachausgabe, Sensoren oder Vibrationsarmbändern/-gürteln.

Insgesamt sollte des Navigationsgerät neueste Techniken (Rover GPS Systeme, Handy, Karte und Schnittstellen) in einem Gerät vereinigen und insbesondere eine Kombination mit dem Blindenstock oder anderen technischen Hilfsmitteln ermöglichen. Trotz der Sprachsteuerung darf die Wahrnehmung und Erfassung der Umgebung durch den Menschen nur möglichst gering beeinflusst werden. Deshalb sind die Techniken am besten in einem Gerät zu kombinieren.

Ein erfindungsgemäßes Navigationssystem umfasst mindestens ein erfindungsgemäßes Navigationsgerät 1, einen ersten Server 10, einen zweiten Server 11, ein Satellitensystem 12 und stationäre GPS Antennen / Referenzstationen 13.

Der erste Server 10 ist zur Bereitstellung von Korrekturdaten von Satellitenpositionierungsdiensten und/oder Korrekturdiensten für das mindestens eine Navigationsgerät 1 eingerichtet. Zur Übertragung der Korrekturdaten von Satellitenpositionierungsdiensten und/oder Korrekturdiensten an das mindestens eine Navigationsgerät 1 ist der erste Server mit einer Sende- und Empfangseinrichtung 14 ausgestattet bzw. an eine Sende- und Empfangseinrichtung zur Übertragung der vorgenannten Daten auf das mindestens eine Navigationsgerät angeschlossen. Die Sende- und Empfangseinrichtung 14 des ersten Servers 10 ist dazu eingerichtet, die Korrekturdaten mittels GPRS, Edge, UMTS und/oder GSM an das mindestens eine Navigationsgerät 1, insbesondere an die (Sende-) und Empfangseinrichtung 3 für Korrekturdaten 16 zu übertragen. Der Datentransfer für Korrekturdaten kann ferner über Handy GPRS- / WAP-/ Internetzugriff erfolgen. Als Referenz- und Korrektursysteme kommen SAPOS, ASCOS oder ähnliche frei zugängliche Referenz- und Korrektursysteme aus der Landesvermessung oder der Wirtschaft in Frage. Vorgesehen ist die Nutzung von SAPOS (Satellitenpositionierungsdienst der deutschen Landesvermessung), ASCOS (EON Ruhrgas oder vergleichbaren Dienstanbietern) mit der Nutzung von einer oder zwei Trägerphasen L1/L2.

Der erste Server 10 ist ferner mit stationären GPS Antennen 13 (SAPOS / ASCOS) als Referenzstationen verbunden.

Der zweite Server 11 ist zur Bereitstellung von topographischen Kartendaten eingerichtet. Ferner ist der zweite Server 11 mit einer Sende- und Empfangseinrichtung 15 zur Übertragung der Kartendaten auf das mindestens eine Navigationsgerät 1, insbesondere die (Sende-) und Empfangseinrichtung 4 für Kartendaten 17 ausgestattet bzw. an eine Sende- und Empfangseinrichtung zur Übertragung der Kartendaten auf das mindestens eine Navigationsgerät 1 angeschlossen. Die Sende- und Empfangseinrichtung des zweiten Servers ist dazu eingerichtet, die Kartendaten mittels GSM, GPRS, EDGE, UMTS, RFID, Near Field Communication oder über das Internet an das mindestens eine Navigationsgerät zu übertragen. Die Karten- und Informationsgrundlagen werden auf dem zentralen zweiten Server 11 vorgehalten. Der Datentransfer für Kartendaten kann ferner über Handy GPRS- / WAP-/ Internetzugriff erfolgen.

Bei den topographischen Kartendaten 17 kann es sich beispielsweise um Katasterdaten der Katasterbehörden, erweiterte Topographiedaten der Städte handeln. Die hochgenaue Erfassung von zusätzlichen topographischen Kartendaten über photogrammetrische oder terrestrische Vermessungen mit einer relativen Genauigkeit von ca. 10 cm digitaler Kartengrundlage auf der Basis bestehender oder neu abzubildender Kartenwerke (ALKIS - Amtliches Liegenschaftskatasterinformationssystem) der Landesvermessung, bilden die wesentliche Grundlage für die topographischen Kartendaten. Die darin entstandenen und enthaltenen Kanten- und Knotenmodelle werden in Abstimmung auf die Bedürfnisse blinder und stark sehbehinderter Menschen, sowie aber auch für jeden anderen Nutzer, navigierbar gemacht. Zu diesen topographischen Kartendaten zählen beispielsweise Gehwege, Wanderwege, Ampeln, Übergänge, Kreisverkehre, Busbahnhöfe und Bushaltestellen, Hindernisse und besondere "Points of Interest". Die Erfassung solcher Daten kann durch ein System, wie z.B. das Fahrzeug Eagle Eye Technologies oder auch herkömmlich terrestrisch erfolgen.

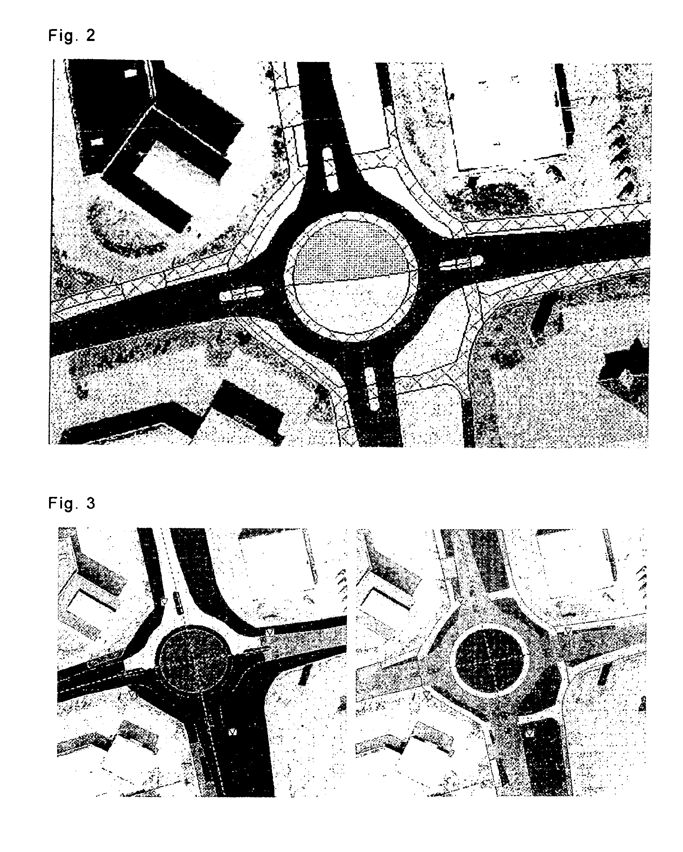

Die topographischen Kartendaten könnten beispielsweise einen sicheren Gehweg definieren. Die Auswertung der Messung über die Beschaffenheit von Straßen und Wegen, lässt eine Einteilung der Wege in verschiedenen Gefährdungskategorien zu. Ein Weg könnte mit "Grün" kategorisiert werden, wenn die technischen (einwandfreier GPS Empfang) und örtlichen Gegebenheiten (wenig Verkehr, breite Wege, sichere Bewegungsfreiheit) entsprechend vorhanden sind. Wege mit der Kennzeichnung "Gelb" oder "Rot" erfordern unterschiedlich gut ausgeprägte taktile Fähigkeiten. Eventuell sind weitere Kenntnisse und Nutzung von zusätzlichen Techniken nötig. Der Fall "Rot" könnte eintreten, wenn nicht ausreichender Satellitenempfang vorhanden ist oder Wege nicht zusätzlich vermessen worden sind. Beispiele für einzelne Kategorisierungen sind in den Fig. 2 und 3 durch einzelne Grauabstufungen dargestellt.

Das Navigationssystem umfasst weiterhin eine Anzahl von Satelliten 12 bei denen es sich um Satelliten des GPS-Systems (NAVSTAR), GLONASS-Systems und/oder Galileo-Systems handelt, wobei das mindestens eine Navigationsgerät 1 dazu eingerichtet ist, komplementär oder einzeln, Navigationsinformationen per DGPS von Satelliten des GPS-Systems, GLONASS-Systems und/oder Galileo-Systems zu empfangen.

Auch sind die stationären GPS Antennen 13 (SAPOS / ASCOS) als Referenzstationen dazu eingerichtet Navigationsinformationen von den Satelliten des GPS-Systems, GLONASS-Systems und/oder Galileo-Systems zu empfangen.

Darüber hinaus weist das erfindungsgemäße Navigationssystem mindestens einen RFID-Transponder 18 auf. Der mindestens eine RFID-Transponder 18 kann dazu eingerichtet sein aktiv (bis zu 15 m Sendebereich) oder auch passive (ab 1 cm Lesebereich) mit dem RFID Lesegerät 5 des Navigationsgerätes 1 zu kommunizieren. Dabei können Informationen, Landmarkensystem und/oder Navigationsdaten 19 ausgetauscht werden.

Mit der Kombination aus Navigationsgerät 1 und RFID-Transpondern und/oder WLAN 18 lässt sich eine "Indoor-Navigation", sprich im Wesentlichen eine Navigation innerhalb eines Gebäudes realisieren. Mit der Kombination aus Satelliten 12, stationären GPS-Antennen 13, erstem Server 10, zweitem Server 11 und Navigationsgerät 1 lässt sich eine "Outdoor-Navigation", sprich im Wesentlichen eine Navigation außerhalb eines Gebäudes realisieren.

Ein Navigationsvorgang mit einem erfindungsgemäßen Navigationsgerät bzw. Navigationssystem für blinde oder sehbehinderte Menschen könnte wie folgt ausgestaltet sein. Die gewünschte Zielführung wird über das Steuerungsmittel 7, insbesondere ein Sprachmodul oder eine Tastatur an das Navigationsgerät 1 übertragen. Das Navigationssystem berechnet auf der Grundlage der, um die zusätzliche Topographie / Infrastruktur erweiterten Kartendaten, die sicherste Route über die Bahndaten der Satelliten und die entsprechenden Korrekturdaten eines Referenzsystems (z.B. SAPOS - Satellitenpositionierungsdienst). Der betroffene Mensch wird anschließend über / durch einen virtuellen Korridor von etwa 30-50 cm Breite auf einem sicheren Gehweg geführt und bei Abweichung von seiner Route wieder zurück auf seine vorher berechnete Strecke geleitet. Die erforderlichen Korrekturdaten für den Empfang der GPS Daten werden sekündlich verbessert übertragen. Sicherheitsrelevante Abweichungen von der Strecke führen zu einem "Stop" und zu einer Neuberechnung der Strecke.

Durch die Kombination und den Einsatz von komplementären oder einzelnen Satellitensystemen (GPS, GLONASS, Galileo) mit hochgenauen Echtzeit Korrekturdatendiensten und einem Navigationsgerät mit hochempfindlichen Differential GPS Sensoren (DGPS) lässt sich ein besonders vorteilhaftes Navigationssystem für blinde oder sehbehinderte Menschen bereitstellen.

Das erfindungsgemäße Navigationsgerät bzw. Navigationssystem für blinde und sehbehinderte Menschen kann beispielsweise folgende Funktionen beinhalten:
- Notfunktion (z.B. SMS mit Standortkoordinaten an Leitstelle)
- Anbindung an den öffentlichen Nahverkehr
- Trace back / Lernfunktion (Wege ablaufen und dezimetergenau speichern)
- Messung bzw. Standortbestimmung im Dezimeterbereich mittels Ein- oder Mehrfrequenztechnologie über verschiedene Satellitenpositionierungsdienste (z.B. SAPOS.ASCOS)
- Sprachgesteuerte Führung über Headset mit Bluetooth oder Kabeltechnik und/oder über Vibrationseinrichtungen
- On-board Navigationslösung oder die Bereitstellung von Kartenmaterial über einen zentralen Server mittels Datenabruf über das Handy
- Sichere Umgehungsmöglichkeiten von Hindernissen mittels Ultraschalltechnik
- Sprachgesteuerte Zusatzinformationen zu interessanten Punkten wie z.B. Kultur, Arzt, Einkauf, Arbeitswege, ÖPNV

Hierdurch eröffnet das erfindungsgemäße Navigationsgerät bzw. Navigationssystem blinden oder sehbehinderten Menschen zahlreiche Möglichkeiten, wie beispielsweise:
- Die Nutzung des öffentlichen Nahverkehrs mittels detaillierter Standortinformation zu Abfahrtsplätzen und -zielen von Bussen und Straßenbahnen.
- Selbstständige Erkundung und Nutzung fremder Städte und Umgebungen, sowie zielgerichtetes Orientieren in unbekannter oder bekannter Infrastruktur Erschließung von Kulturellen Einrichtungen.
- Autarke Bewegungsmöglichkeiten auch im fremden Gebiet.
- Weitgehende Unabhängigkeit von Taxi- und weiteren Mobilitätsdiensten
- In Notsituationen über GPS geortet werden zu können.
- Transponder-, Transformations-, Sensor- und Funktechniken nutzen zu können, um ebenfalls eine Orientierung innerhalb von Gebäuden zu ermöglichen und auf zusätzliche Informationen zurückgreifen zu können
- Freie Bewegungsmöglichkeiten, mehr Selbstständigkeit z.B. Arztgänge ohne Taxi, Stadtorientierung, Nutzung der ÖPNV und weitere
- Kulturelle Erkundung von Städten
- Notfunktion / Ortungsmöglichkeit
- Infos zu neuralgischen Punkten

Aber auch Synergieeffekte können sich durch das vorgeschlagene erfindungsgemäß Navigationsgerät bzw. Navigationssystem einstellen, wie beispielsweise:
- Breite Nutzung der Geobasisdaten und Ausnutzung vorhandener Ressourcen der Vermessungstechnik
- NKF konforme Erfassung der Liegenschaften möglich
- In Forschungsprojekten

## Patentansprüche

1. Navigationsgerät (1) für blinde oder sehbehinderte Menschen, umfassend mindestens:
- eine DGPS (Differential Global Positioning System)-Empfangseinrichtung (2);
- eine Sende- und Empfangseinrichtung (3) für Korrekturdaten (16) eines ersten Servers (10) eines Satellitenpositionierungsdienstes;
- eine Sende- und Empfangseinrichtung (4) für topographischen Kartendaten (17) eines zweiten Servers (11) mit topographischen Kartendaten.

2. Navigationsgerät nach Anspruch 1, **dadurch gekennzeichnet, dass** die Sende- und Empfangseinrichtung (3) für Korrekturdaten (16) als GSM Sende- und Empfangseinrichtung, GPRS Sende- und Empfangseinrichtung, EDGE Sende- und Empfangseinrichtung und/oder UMTS Sende- und Empfangseinrichtung ausgestaltet ist.

3. Navigationsgerät nach einem der vorhergehenden Ansprüche,
**dadurch gekennzeichnet, dass** die Sende- und Empfangseinrichtung (4) für Kartendaten (17) als GSM Sende- und Empfangseinrichtung, GPRS Sende- und Empfangseinrichtung, EDGE Sende- und Empfangseinrichtung und/oder UMTS Sende- und Empfangseinrichtung ausgestaltet ist.

4. Navigationsgerät nach einem der vorhergehenden Ansprüche, **dadurch gekennzeichnet, dass** das Navigationsgerät (1) mit einem RFID/NFC Lese- und/oder Schreibgerät (5) ausgestattet ist.

5. Navigationsgerät nach einem der vorhergehenden Ansprüche, **dadurch gekennzeichnet, dass** das Navigationsgerät mit mindestens einer Schnittstelle (6), insbesondere einer WLAN- und/oder Bluetooth- und/oder USB-Schnittstelle ausgestattet ist.

6. Navigationsgerät nach einem der vorhergehenden Ansprüche, **dadurch gekennzeichnet, dass** das Navigationsgerät mit mindestens einer Führungseinrichtung (8) ausgestattet ist, die als Vibrationsarmband, akustischer Signalgeber und/oder Sprachausgabeeinrichtung ausgestaltet sein kann.

7. Navigationsgerät nach einem der vorhergehenden Ansprüche, **dadurch gekennzeichnet, dass** das Navigationsgerät mit mindestens einer Steuereinrichtung (7) ausgestattet ist, die als Sprachsteuereinrichtung oder als Tastatur ausgestaltet sein kann.

8. Navigationssystem für blinde oder sehbehinderte Menschen, umfassend mindestens:
- ein Satellitensystem (12), welches zur Übertragung von Navigationssignalen (20) eingerichtet ist,
- ein Navigationsgerät (1) gemäß einem der Ansprüche 1 bis 7, welches zum Empfang der Navigationssignale (20) eingerichtet ist,
- einen ersten Server (10), der zur Bereitstellung von Korrekturdaten (16) von Satellitenpositionierungsdiensten und/oder Korrekturdiensten für das mindestens eine Navigationsgerät (1) eingerichtet ist, wobei der erste Server (10) zur Übertragung der Korrekturdaten (16) von Satellitenpositionierungsdiensten und/oder Korrekturdiensten an das mindestens eine Navigationsgerät mit einer Sende- und Empfangseinrichtung (14) ausgestattet bzw. an eine Sende- und Empfangseinrichtung zur Übertragung der Korrekturdaten auf das mindestens eine Navigationsgerät angeschlossen ist,
- einen zweiten Server (11), der zur Bereitstellung von topographischen Kartendaten (17) für das mindestens eine Navigationsgerät (1) eingerichtet ist, wobei der zweite Server (11) mit einer Sende- und Empfangseinrichtung (15) zur Übertragung der Kartendaten (17) auf das mindestens eine Navigationsgerät (1) ausgestattet bzw. an eine Sende- und Empfangseinrichtung zur Übertragung der Kartendaten auf das mindestens eine Navigationsgerät angeschlossen ist,
- eine Anzahl stationärer GPS-Antennen (13) als Referenzstationen, die zum Empfang der Navigationssignale (20) des Satellitensystems (12) eingerichtet sind, wobei die GPS-Antennen (13) mit dem ersten Server (10) verbunden sind.

9. Navigationssystem für blinde oder sehbehinderte Menschen nach einem der vorhergehenden Ansprüche, **dadurch gekennzeichnet, dass** die Sende- und Empfangseinrichtung (14) des ersten Servers für Korrekturdaten (16) als GSM Sende- und Empfangseinrichtung, GPRS Sende- und Empfangseinrichtung, EDGE Sende- und Empfangseinrichtung und/oder UMTS Sende- und Empfangseinrichtung ausgestaltet ist.

10. Navigationssystem für blinde oder sehbehinderte Menschen nach einem der vorhergehenden Ansprüche, **dadurch gekennzeichnet, dass** die Sende- und Empfangseinrichtung (15) des zweiten Server (11), der zur Bereitstellung von topographischen Kartendaten (17) eingerichtet ist, als GSM Sende- und Empfangseinrichtung, GPRS Sende- und Empfangseinrichtung, EDGE Sende- und Empfangseinrichtung und/oder UMTS Sende- und Empfangseinrichtung ausgestaltet ist.

11. Navigationssystem für blinde oder sehbehinderte Menschen nach einem der vorhergehenden Ansprüche, **dadurch gekennzeichnet, dass** das Navigationssystem mindestens einen RFID-Transponder (18) aufweist.

12. Navigationssystem für blinde oder sehbehinderte Menschen nach einem der vorhergehenden Ansprüche, **dadurch gekennzeichnet, dass** es sich bei den topographischen Kartendaten (17) um Katasterdaten der Katasterbehörden und/oder erweiterte Topographiedaten der Städte handelt, die auf die Bedürfnisse blinder und stark sehbehinderter Menschen abgestimmt worden sind.

13. Verfahren zu Navigation mit einem erfindungsgemäßen Navigationssystem für blinde oder sehbehinderte Menschen gemäß einem der Ansprüche 8 bis 12, **gekennzeichnet durch** nachfolgende Schritte:
a) die gewünschte Zielführung wird über das Sprachmodul oder eine Tastatur an das Navigationsgerät übertragen
b) das Navigationsgerät berechnet auf der Grundlage der, um die zusätzliche Topographie / Infrastruktur erweiterten Kartendaten, die sicherste Route über die Bahndaten der Satelliten und die entsprechenden Korrekturdaten eines Referenzsystems (z.B. SAPOS - Satellitenpositionierungsdienst),
c) das Navigationsgerät navigiert den Benutzer über / **durch** einen virtuellen Korridor von 30-50 cm Breite auf einem sicheren Gehweg.

14. Verfahren nach Anspruch 13, **dadurch gekennzeichnet, dass** der Benutzer bei Abweichung von der vorausberechneten Route wieder zurück auf seine vorher berechnete Strecke geleitet wird.

15. Verfahren nach einem der vorhergehenden Ansprüche, **dadurch gekennzeichnet, dass** die erforderlichen Korrekturdaten (16) für den Empfang der GPS Daten sekündlich verbessert und zwischen der Sende- und Empfangseinrichtung (14) des ersten Servers (10) und der Sende- und Empfangseinrichtung (3) des mindestens einen Navigationsgerät (1) übertragen werden.

16. Verfahren nach einem der vorhergehenden Ansprüche, **dadurch gekennzeichnet, dass** der Benutzer bei sicherheitsrelevanten Abweichungen von der Strecke zu einem "Stop" veranlasst wird und eine Neuberechnung der Strecke durchgeführt wird.
